# EUROPEAN PATENT SPECIFICATION

(11) **EP 1 334 602 B1**
(45) Date of publication and mention of the grant of the patent: **06.01.2010**
(21) Application number: 01996961.7
(22) Date of filing: 13.11.2001
(51) Int. Cl.: H04L 29/08, H04L 9/30

(54) **METHOD FOR FORMING AN INTERFACE**
VERFAHREN ZUR BILDUNG EINER SCHNITTSTELLE
PROCEDE RELATIF A L'ETABLISSEMENT D'UNE INTERFACE

(30) Priority: 15.11.2000 FI 20002508
(43) Date of publication of application: 13.08.2003
(73) Proprietor: SmartTrust Systems Oy, 00510 Helsinki (FI)
(72) Inventor: HEINONEN, Petteri, FIN-00550 Helsinki (FI); OTRANEN, Jari, 02600 Espoo (FI); HÄMÄLÄINEN, Antti, P., J., FIN-00680 Helsinki (FI); HARJULA, Jari, FIN-05900 Hyvinkää (FI)
(74) Representative: Söderman, Päivi Karin Lisbeth
(86) International application number: PCT/FI2001/000985
(87) International publication number: WO 2002/041602

(56) References cited:
- WO-A1-00/59149
- WO-A1-01/18716
- EDMUND X. DEJESUS: 'Wireless security: Locking down the...' INFORMATION SECURITY MAGAZINE, [Online] October 2000, XP002907166
- STEN LANNERSTROM: 'White paper, WAP it and WIBbit it good!' SMARTTRUST, [Online] 2001, PA4, DOC. NO. SPM 01:0033, XP002907164 Retrieved from the Internet: <URL:http://www.smarttrust.com> [retrieved on 2002-01-10]
- PRASAD V. ET AL.: 'Scalable policy driven and general purpose public key infrastructure (PKI)', December 2000, COMPUTER SECURITY APPLICATIONS, 2000. ACSAC ANNUAL CONFERENCE XP002907165 ISBN: 0-7695-0859-6 * page 138 - page 147 *

## Description

### TECHNICAL FIELD

The presented invention is concerned with telecommunications technology. The invention especially targets on a method for the forming of a terminal independent interface for security functions between a service and its recipient while using standardized page description language.

### BACKGROUND ART

The use of the wireless application protocol (WAP, Wireless Application Protocol) is becoming more common in solutions where a connection between mobile terminals, as a mobile phone, and internet applications, for instance e-mail, the WWW (World Wide Web) and newsgroups, is needed. The wireless application protocol offers an architecture which fits mobile phones, the browser programs of mobile phones and the WWW into a working wholeness. The HTML-language (Hyper Text Markup Language) used in the WWW can, when necessary, be transformed into WML (Wireless Markup Language) which has been developed for the wireless environment, when data is transferred to mobile stations. At present the description language of the WAP-standard is the WML-language, but also any other description language in accordance with the coming WAP-standard can be comprised as the language.

The wireless application protocol comprises five layers: the wireless application environment (WAE, Wireless Application Environment), the wireless session layer (WSL, Wireless Session Layer), the wireless transaction layer (WTL, Wireless Transaction Layer), the wireless transport layer security layer (WTLS, Wireless Transport Layer Security) and the wireless transfer layer (WDP, Wireless Datagram Layer). With wireless application environment it is meant for instance WTA (WTA, Wireless Telephone Application) or any other suitable environment. There is furthermore a system dependant layer as the lowest layers , which defines the way in which the information is transported inside the system in question. At present the last accepted WAP-specification version number is 1.3.

The especial purpose of the WAP-architecture is to make it possible to use, among others, services in the internet on the mobile terminals, the data handling ability, screen size or memory capacity of which is small or limited. Terminals like the ones described are for instance mobile stations and PDAs (PDA, Personal Digital Assistant). The WAP-specification does not take a stand on how the air interface is realized. This makes it possible for several different operators, terminal manufacturers and program manufacturers to benefit from the possibilities that the standard brings with it.

At present the problem is how to use the standardized page description language, for instance WML, for the making of an encryption and a digital signature without restricting to a certain encryption or signature method or terminal. Furthermore, a problem is that for instance the WTLS-encryption handling the encryption of data in the WAP-protocol is not a pure end-to-end encryption; the encryption can be decrypted in between. The contents can be accessed and thus the risk is that it can be altered. Thus, the confidence in the data contents and its integrity is lost.

A certain solution is to use manufacturer specific page description languages, for example a manufacturer specific WML-language, which still is not in accordance with a standard. This leads to that all the components in the network and the terminal at the end of the chain do not understand the manufacturer specific page description language.

Another solution is to use script language, for example WMLScript, but the problem with this alternative is the lack of functions necessary for encryption and signature. Furthermore, the inconvienience with using the script-language is that the terminals browser program does not necessarily support the use of the script language.

In addition, a situation where new functions are wanted to be added to the service becomes troublesome. The producer of the service has to translate the program after each change. The changes made are often dependant on the terminal, so different changes have to be made on different programs.

As prior art, further reference is made to the WO publication 00 59149 and the article by EDMUND X. DEJESUS:"Wireless security: Locking down the..."INFORMATION SECURITY MAGAZINE,[Online] October 2000, XP002907166. The further introduces a secure wireless electronic-commerce system with digital product certificates and digital license certificates. The system includes a wireless gateway and a server couple able to the wireless gateway, delivering content items to a wireless device, i.e. a user. The server maintains, for each wireless client associated with the system, a record of licenses for that client and a record of content items associated with each license. The function of the software server is to digitally sign software products and make the software product and corresponding certificate available for download. The latter document refers to securing of e-commerce transmissions to/from wireless devices. A PKI toolkit is used to create secure encrypted sessions between online networked applications. The toolkit also allows the processing of digital signatures. Toolkits can include WML and an implementation of WTLS.

### OBJECT OF THE INVENTION

The purpose of the invention is to remove or at least significantly alleviate the disadvantages mentioned above. Especially, the invention is concerned with a new kind of method, with which a terminal-independent interface can be offered to the service provider, through which interface functions concerned with the security measures can be called.

### SUMMARY OF THE INVENTION

The presented invention is concerned with a method for the forming of a terminal independent interface for security functions between a service and a receiver using standardized page description language. The method comprises the steps of including identification data of the recipient into a document, sending the document from the service to the proxy-server, checking the protocol used by the recipient with the proxy-server and transmitting the document with the proxy-server to the recipient using a transmission protocol understood by the recipient. The method is mainly **characterized in that** the method further comprises the steps of encapsulating in the service the necessary function calls concerned with the security functions into the document in accordance with a standardized page description language, and calling for said functions with the proxy-server for the realisation of said security functions.

With standardized page description language it is referred to for example the WML-language.

In the method of the invention, the function call requests concerned with the security measures are encapseled in the service into a document in accordance with the standardized page description language. If the page description language is WML, the do-element with a type-attribute is used, with which do-type the security measures to be performed to the proxy-server are defined.

With service it is reffered to a service offered by a service provider, where security measures are needed. Security measures are for instance a digital signature, the verification of a digital signature, the encryption of data, the decryption of data and so forth. A service provider is for instance a bank, a credit card company, an internet shop etc. A service is therefore for instance a bank service that demands security measures. The service adds the identity data reffering to the final recipient of the document into the document formed by the service. The service mediates the document to the proxy-server. Said functions are called with the proxy-server for the realisation of said security measures. The function calls can be realized on the proxy-server itself or they can be mediated to a separate PKI-server, which takes care fo the security measures. In said security measures a symmetric or an asymmetric method is used for the signature and/or encryption. Methods like these are for instance 3DES (3DES, Triple Data Encryption Standard) and RSA (RSA, Rivest Shamir Adleman).

The protocol used by the recipient is checked with the proxy-server. The document in accordance with the standardized page description language handled with the security measures received from the service is mediated with the proxy-server to the recipient with the mediation protocol understood by the recipient. If the page description language is WML, the document in accordance with the standardized WML-language is, if necessary, changed to a manufacturer specific WML-language, XML-language (XML, extended Markup Language) or to another form understood by the recipient. If the recipient cannot interpret the received document, it can be ignored.

The sending of information between the service and the recipient can be activated in different ways. In a certain case the recipient first sends a request, to which the service responds. In another case the service sends information to the recipient with a push-method without a request from the recipient. In the before mentioned case the proxy-server checks the protocol used by the recipient in the request and mediates the document, received from the service as a response to the request, in accordance with the standardized page description which has been handled with security measures to the recipient in accordance with the protocol used by the recipient.

In the latter case the recipient does not first mediate a service request to the service, the service uses the push-function. In this case the service sends the document to be sent to the recipient to the proxy-server and at the same time identifies the recipient, to which the proxy-server later mediates the document handled with the security measures. The identification data is for instance a network identity or an MSISDN-number (MSISDN, Mobile Subscriber ISDN). A network identity is an unambigous user specific mark, to which signature and encryption keys have been attached during the creation of it. Corresponding data pairs are maintained on the proxy-server, with which the recipient's identification data and mediation protocol are tied together. The proxy-server can choose the right mediation protocol on the basis of the identification data connected with the recipient received from the service.

Because of the presented invention the faction offering services to a fixed line or wireless terminal which demand security measures does not need to care about the recipient's terminal or its attributes. An interface is offered to the faction offering a service, through which it calls the necessary security measures in a terminal independent way. The security function requests are always sent from the service in accordance with the standardized page description language. Because of the interface the faction offering services does not need to update its software with terminal specific changes.

Because of the invention the functions concerned with the digital signature and encryption can be taken into widespread use regardless of page description language.

### LIST OF DRAWINGS

In the following the invention is presented in detail using application examples, in which
figure 1 presents the functioning of the method in accordance with the presented invention, and
figure 2 presents a certain advantageous system, in which the method in accordance with the invention can be realized.

### DETAILED DESCRIPTION OF THE INVENTION

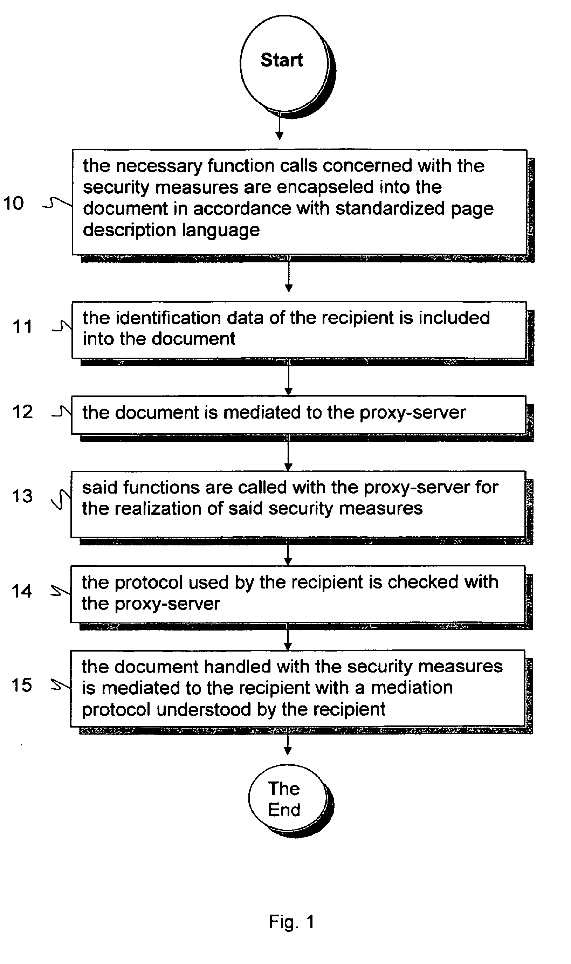

Figure 1 presents the functioning of the method in accordance with the invention. The method in accordance with the invention is concerned with the forming of a terminal independent interface for the security measures between the service and the recipient while using standardized page description language. Security measures are for instance a digital signature, the verification of a signature, the encryption of data, the decryption of data etc.. With standardized page description language it is refered to for instance WML-language.

In accordance with block 10 the necessary function requests concerned with the security measures are encapsulated into the document in accordance with the standardized page description language. The service can send information to the recipient with the push-method without an actual service request. In the second alternative the recipient has, before block 10, sent a service request for the receiving of information. In this case the service request made by the recipient contains the identification data of the recipient, on the basis of which the service can send the response to the right recipient.

The service attaches the identification data of the recipient into the document, block 11. In accordance with block 12 the document is mediated to the proxy-server. With the proxy-server said functions are called for the realisation of said security measures, block 13. Said functions can be called in the proxy-server or in a separate PKI-server (PKI, Publick Key Infrastructure). A symmetric or asymmetric method is used for the signature and/or encryption concerned with the security measures.

In accordance with block 14 the protocol used by the recipient is checked with the proxy-server. The proxy-server maintaines corresponding data pairs, with which the identification data and mediation protocol of the recipient is tied together. With identification data it is for instance refered to a network identity or an MSISDN-number. The network identity is an unambigous user specific mark, to which has been attached signature and encryption keys during its creation. The proxy-server searches identification data of the recipient defined by the service and can thereby choose the right mediation protocol. The proxy-server mediates the document, in accordance with the page description language, handled with the security measures to the recipient using the mediation protocol understood by the recipient, block 15. If the recipient cannot interpret the received document, it can be ignored.

Because of the invention the security function requests are always sent using the standardized page description language. Because of the interface the faction offering services doesn't need to update its software with terminal specific changes.

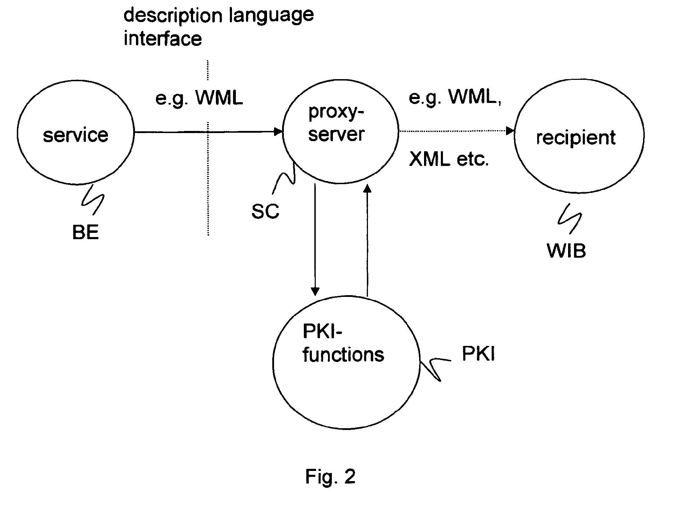

The example in accordance with figure 2 consists of the service BE, the proxy-server SC, the PKI-server PKI and the recipient WIB. With service BE it is refered to for instance a bank's, a credit instituiton's or a online trader's service in which security measures are taken advantage of. Security measures are for instance a digital signature, the verification of a signature, the encryption of data, the decryption of data etc.. The proxy-server can do the demanded security functions itself or send the function requests concerned with the security measures to the PKI-server PKI.

In the example in accordance with figure 2 the information between the service BE and the proxy-server SC is mediated in accordance with the standardized WML-description language. The information between the proxy-server SC and the recipient WIB is mediated in accordance with WML-language, manufacturer specific WML-language, XML-language or in accordance with another form of data transfer suited to the purpose. With recipient WIB it is advantageously refered to a terminal, a browser program of a terminal, software of a terminal or other, with which the information sent from the proxy-server SC can be handled.

In the following the functioning of the example in accordance with figure 2 is explained more specifically. Even though it is presented in the following that the page description language between the service and the proxy-server is WML, it can be any other language suited for the purpose, for example XML, HTML (Hyper Text Markup Language), HDML (HDML, Handheld device Markup Language) etc.. The starting point of the invention is to funtion in such a way that the data traffic between the service BE and the proxy-server SC is in accordance with standardized page description language.

In this example the do-element is used with the **type**-attribute. The **type**-attribute gives the receiving party a reference on how the user of the do-element wants it to be used. Most of the **type**-attributes are reserved, but experimental and manufacturer specific ones have been defined into the language. These attributes can be used to broaden the WML-language, but still simultaneously preserve the definitions of the WML-specifications. When manufacturer specific **type**-attributes are used, the proxy-server SC can interpret the requests concerned with the security measures from a standard according WML-document, when standard according WAP-customer programs ignore this information.

The interface and the way in which the service BE sends security function requests to the proxy-server is described in the following. A signature request has been presented in the following.

```
 <do type="vnd.smarttrust.sign" label="SIGN"
 optional=
 "true">
     <refresh>
         <setvar name="signParam" value="foo"/>
         <setvar name="transID"
 value="TRANSACTION_ID"/> <setvar
 name="options" value="OPTIONS"/> <setvar
 name="keyIdType" value="12345"/> <setvar
 name="keyId" value="KEY_ID"/> <setvar
 name="userIDType" value="12345"/> <setvar
 name="userID" value="USERID"/> <setvar
 name="modifiable" value="truelfalse"/>
     </refresh>
 </do>
```

The **label**-attribute in the do-element has at most a length of six characters and it only serves a purpose as a giver of information. The **optional**-attribute in the **do**-element makes it possible for the recipient WIB to ignore the used **do**-element.

Of the columns appearing in the table WIG refers to the realisation way of the invention and WAP to the realisation way of the nearest technical standard. In the columns "M" means mandatory and "O" optional.

| **Attribute** | **Type** | **Explanation** | **WIG** | **WAP** |
|---|---|---|---|---|
| UserID-Type | String (Integer Value) | Defines the user identification type which the service BE uses, with which it is placed abreast with the NID/MSISDN used by the proxy-server SC. | M | M |
| | | NID = 1 | | |
| | | MSISDN = 2 | | |
| | | BESPECIFIC = 3 | | |
| UserID | String | Identifies the user. | M | M |
| Sign Param | String | The name of the URL-parameter which is returned in the HTTP GET-request, signed by the recipient WIB. | M | M |
| TransID | String | An unambigous transaction mark. | M | M |
| Options | Integer | In use only in WAP-client programs. | O | M |
| KeyID Type | String (Integer Value) | In use only in WAP-client programs | O | M |
| KeyID | String | In use only in WAP-client programs. | O | M |
| Modifiable | String | Defines if the signed parameter is static ("false") or dynamic ("true"). | O | O |

The interface and the way in which the service BE sends security function requests to the proxy-server is described in the following. Another way to make a signature request is presented in the following. The MAC (ISO 9797) method is used. On the basis of the request the fed information is signed with the 3DES-method (3DES, Triple Data Encryption Standard) in an external CBC-mode (CBC, Cell Block Cipher) using two keys.

```
 <do type="vnd.smarttrust.kmac" label="KMAC"
 optional=
 "true">
     <refresh>
         <setvar name="signParam" value="foo"/>
             <setvar name="transID"
 value="TRANSACTION_ID"/> <setvar
 name="userIDType" value="12345"/> <setvar
 name="userID" value="USERID"/> <setvar
 name="modifiable" value="truelfalse"/>
     </refresh>
 </do>
```

The **label**-attribute in the **do**-element has at most a length of six characters and it only serves a purpose as a giver of information. The **optional**-attribute in the **do**-element makes it possible for the recipient WIB to ignore the used **do**-element.

| **Attribute** | **Type** | **Explanation** | **WIG** | **WAP** |
|---|---|---|---|---|
| UserID-Type | String (Integer Value) | Defines the user identification type which the service BE uses, with which it is placed abreast with the NID/MSISDN used by the proxy-server SC. | M | X |
| | | NID = 1 | | |
| | | MSISDN = 2 | | |
| | | BESPECIFIC = 3 | | |
| UserID | String | Identifies the user. | M | M |
| Sign Param | String | The name of the URL-parameter which is returned in the HTTP GET-request, signed by the recipient WIB. | M | M |
| TransID | String | An unambigous transaction mark. | M | M |
| Modifiable | String | Defines if the signed parameter is static ("false") or dynamic ("true"). | O | O |

The interface and the way in which the service BE sends security function requests to the proxy-server is described in the following. An encryption request is presented in the following. On the basis of the request the input information is encrypted using the 3DES-method in an external CBC-mode using two keys.

```
 <do type="vnd.smarttrust.encrypt" label="ENCR"
 optional="true">
     <refresh>
         <setvar name="encryptParam"
 value="foo"/> <setvar name="userIDType"
 value="12345"/> <setvar name="userID"
 value="USERID"/>
     </refresh>
 </do>
```

The "X" in the table means that the nearest technical standard WAP does not at present support this function.

| **Attribute** | **Type** | **Explanation** | **WIG** | **WAP** |
|---|---|---|---|---|
| Encrypt Param | String | Character line which contains the name of the variable which the recipient WIB encrypts. | M | X |
| UserID-Type | String (Integer Value) | Defines the user identification type which the service BE uses, with which it is placed abreast with the NID/MSISDN used by the proxy-server SC. | M | X |
| | | NID = 1 | | |
| | | MSISDN = 2 | | |
| | | BESPECIFIC = 3 | | |
| UserID | String | Identifies the user. | M | X |

The interface and the way which the service BE sends security function requests to the proxy-server is described in the following. A decryption request is presented in the following. On the basis of the request the encryption is decrypted with the 3DES-method in an external CBC-mode using two keys.

```
 <do type="vnd.smarttrust.decrypt" label="DECR"
 optional="true">
     <refresh>
         <setvar name="stringToDecrypt"
 value="plain"/> <setvar
 name="decryptedString" value="foo"/> <setvar
 name="userIDType" value="12345"/> <setvar
 name="userID" value="USERID"/>
     </refresh>
 </do>
```

| **Attribute** | **Type** | **Explanation** | **WIG** | **WAP** |
|---|---|---|---|---|
| StringTo-Decrypt | String | Information which is encrypted using the proxy-server and which the recipient WIB decrypts. | M | X |
| Decrypted String | String | A variable, to where the information which has been decrypted by the recipient WIB to plain text is set. | M | X |
| UserID-Type | String (Integer Value) | Defines the user identification type which the service BE uses, with which it is placed abreast with the NID/MSISDN used by the proxy-server SC. | M | X |
| | | NID = 1 | | |
| | | MSISDN = 2 | | |
| | | BESPECIFIC = 3 | | |
| UserID | String | Identifies the user. | M | X |

Furthermore, the interface between the service BE and the proxy-server SC is described in the following. When implementing security measures it is possible to take advantage of the first function call's output as the argument for the second function call. Such a situation can arise in for instance the following situations.
1. The service BE sends information, which is encrypted using the proxy-server SC and which the recipient WIB decrypts. The value of the decrypted variable can furthermore be for instance shown to the user or be used as an argument for an encryption service.
2. The information is signed before performing the encryption.

In the following it is examplary presented, how the data in the **contract**-variable is signed using the **do**-type and then how the then signed data in the **contract**-variable is encrypted using the **do**-type (**contract** consists of all the variables **prefix**, amount and **suffix**).

```
 <do type="vnd.smarttrust.sign"
 optional="true">
     <refresh>
         <setvar name="modifiable" value="true"/>
         <setvar name="signedParam"
 value="contract"/> <setvar name="userIDType"
 value="3"/> <setvar name="userID"
 value="test user"/>
     </refresh>
 </do>

 <do type="vnd.smarttrust.encrypt"
 optional="true">
     <refresh>
         <setvar name="encryptParam"
 value="contract"/> <setvar name="userIDType"
 value="3"/> <setvar name="userID"
 value="test user"/>
     </refresh>
 </do>

 <p>
 <anchor>
 <go
 href="http://www.backend.com/file?contract=$(p
 refix)$(amount)$(suffix)"/>
 </anchor>
 </p>
```

In the following it is examplary presented, how the proxy-server SC can alter the presentation form of the generic **do**-type in order to correspond to the receiving terminal while using security functions.

The recipient WIB requests sensitive information from the service BE. The service BE mediates the following WML-card as a response to the request to the proxy-server SC.

```
 <wml>
   <card>
     <do type="vnd.smarttrust.decrypt"
 optional="true">
        <refresh>
           <setvar name="stringToDecrypt"
 value="account balance : -100 FIM"/>
           <setvar name="decryptedString"
 value="output"/>
           <setvar name="userIDType" value="3"/>
           <setvar name="userID" value="test
 user"/>
        </refresh>
     </do>
     <p>
     $(output) <!--displays the data without
 padding bytes -->
     </p>
   </card>
 </wml>
```

The proxy-server SC encrypts the character line "account balance: -100FIM" and mediates the information to the recipient WIB. The recipient WIB decrypts the encryption and stores the data into the **output**-variable, which value can be for instance shown to the user.

It is described as an example in the following, how the recipient WIB sends confidential information to the service BE. The data to be sent is for instance a password. The recipient WIB encrypts the value of the **pwd**-variable (password) and sends it to the proxy-server SC.

```
 <wml>
   <card>
     <p>
     <input title="enter password" type="text"
 name="password"/>
     </p>
     <do type="vnd.smarttrust.encrypt"
 optional="true">
        <refresh>
      <setvar name="encryptParam" value="pwd"/>
      <setvar name="userIDType" value="3"/>
      <setvar name="userID" value="test user"/>
        </refresh>
     </do>
     <p>
     <anchor>
        <go href="http://www.back-
 end.com/file?pwd=$(pas
 sword)"/>
     </anchor>
     </p>
  </card>
 </wml>
```

The proxy-server SC decrypts the encryption of the **pwd**-variable and sends an HTTP GET-request to the service, which consists of the stored plain text of the **pwd**-variable.

### GET /file?pwd="password entered" HTTP /1.1

It is described as an example in the following, how the recipient WIB signs and encrypts the received payment request or contract received from the service BE. The recipient WIB uses the MAC-method for the signature. The example consists of three phases:
1. Encrypted data is sent to the recipient WIB, that consists of a frame agreement: **"prefix"** and "**suffix**". These can be any static data, for instance pre filled fields.
2. The **"contract"**-variable consists of the following data: **"prefix"** + the input of the user + **"suffix".** The data said above is signed after the PIN-inquiry confirmation (PIN, Personal Identification Number).
3. The data in the "**contract**"-variable said above is encrypted.

```
 <wml>
  <card>
     <do type="vnd.smarttrust.decrypt"
 optional="true">
       <refresh>
      <setvar name="stringToDecrypt" value="I
 wish to buy"/>
           <setvar name="decryptedString"
 value="prefix"/>
 <setvar name="userIDType" value="3"/>
 <setvar name="userID" value="test user"/>
        </refresh>
     </do>

     <do type="vnd.smarttrust.decrypt"
 optional="true">
        <refresh>
 <setvar name="stringToDecrypt" value="Pokemon
 Figures"/>
      <setvar name="decryptedString"
 value="suffix"/>
 <setvar name="userIDType" value="3"/>
 <setvar name="userID" value="test user"/>
        </refresh>
     </do>

     <p>
     <input type="text" name="amount"/>
     </p>
     <do type="vnd.smarttrust.kmac"

 optional="true">
        <refresh>
 <setvar name="modifiable" value="true"/>
 <setvar name="signedParam" value="contract"/>
 <setvar name="userIDType" value="3"/>
 <setvar name="userID" value="test user"/>
       </refresh>

     </do>
     <do type="vnd.smarttrust.encrypt"
 optional="true">
       <refresh>
 <setvar name="encryptParam" value="contract"/>
 <setvar name="userIDType" value="3"/>
 <setvar name="userID" value="test user"/>
       </refresh>
     </do>

     <p>
     <anchor>
     <go href="http://www.back-
 end.com/file?contract=$(
 prefix)$(amount)$(suffix)"/>
     </anchor>
     </p>

  </card>
 </wml>
```

The proxy-server SC decrypts the encryption and verifies the signature. Thereafter the proxy-server sends an HTTP GET-request to the service BE.

### GET /file?contract=" I wish to buy X Pokemon figures"&KMAC_FIELDS="contract" HTTP /1.1

The request furthermore consists of the KMAC_FIELDS-parameter, which indicates the verified parameters.

It is described as an example in the following, how the recipient WIB signs and encrypts the payment request or contract, received from the service BE. In this example the recipient WIB uses an RSA-signature. The example consists of three phases:
1. Encrypted data is sent to the recipient WIB, that consists of a frame agreement: **"prefix"** and **"suffix".** These can be any static data, for instance pre filled fields.
2. The **"contract"-**variable consists of the following data: **"prefix"** + the input of the user + **"suffix".** The data said above is signed after the PIN-inquiry confirmation (PIN, Personal Identification Number).
3. The data in the **"contract"-**variable said above is encrypted.

```
 <wml>
  <card>
     <do type="vnd.smarttrust.decrypt"
 optional="true">
       <refresh>
 <setvar name="stringToDecrypt" value="I wish
 to buy"/>
 <setvar name="decryptedString" value="prefix"/>
 <setvar name="userIDType" value="3"/>
 <setvar name="userID" value="test user"/>
        </refresh>
     </do>

     <do type="vnd.smarttrust.decrypt"
 optional="true">
        <refresh>
 <setvar name="stringToDecrypt" value="Pokemon
 figures"/>
 <setvar name="decryptedString" value="suffix"/>
 <setvar name="userIDType" value="3"/>
 <setvar name="userID" value="test user"/>
        </refresh>
     </do>

     <p>
     <input type="text" name="amount"/>
     </p>

     <do type="vnd.smarttrust.sign"
 optional="true">
        <refresh>
 <setvar name="modifiable" value="true"/>
 <setvar name="signedParam" value="contract"/>
 <setvar name="userIDType" value="3"/>
 <setvar name="userID" value="test user"/>
        </refresh>
     </do>

     <do type="vnd.smarttrust.encrypt"
 optional="true">
        <refresh>
 <setvar name="encryptParam" value="contract"/>
 <setvar name="userIDType" value="3"/>
 <setvar name="userID" value="test user"/>
        </refresh>
     </do>

     <p>
     <anchor>
     <go href="http://www.back-
 end.com/file?contract=$
 (prefix)$(amount)$(suffix)"/>
     </anchor>
     </p>

  </card>
 </wml>
```

The proxy-server SC decrypts the encryption and verifies the signature. Thereafter the proxy-server sends an HTTP GET-request to the service BE.

### GET /file?contract=" I wish to buy X Pokemon figures"&NR_FIELDS="contract" HTTP /1.1

The request furthermore consists of the NR_FIELDS-parameter, which indicates the verified parameters.

In a certain application in accordance with figure 2 the **<do type> -** structure is not mediated as such to the recipient. The **<do type> -** structure can be replaced with a manufacturer specific WMLScript plugin-invitation. The invitation reffering to the signature is for instance of the form hftp://manufacturer. com (sig, x, x). if the recipient's terminal is a computer the the signature invitation in accordance with the **<do type> -** structure is changed for instance into the XML-signature request from.

Because of the invention the functions concerned with the digital signature and encryption can be taken into widespread use regardless of page description language used. With the present invention a service calls the necessary security measures in a terminal independent way through an interface offered to the service. The service does not need to care about the type of the terminal of the recipient.

The invention is not limited to solely concern the application examples presented above, other variations are possible while staying within the inventive idea defined by the patent claims.

## Claims

1. A method for the forming of a terminal independent interface for security functions between a service and a receiver using standardized page description language, the method comprising the steps of:
including identification data of the recipient into a document;
sending the document from the service to a proxy-server;
checking the protocol used by the recipient with the proxy-server;
transmitting the document with the proxy-server to the recipient using a transmission protocol understood by the recipient; **characterized in that** the method further comprises the steps of:
encapsulating in the service the necessary function calls concerned with the security functions into the document in accordance with a standardized page description language; and
calling for said functions with the proxy-server for the realization of said security functions.

2. The method according to claim 1, **characterized in that** function call encapsulated in the standardized page description language document is a signature request.

3. The method according to claim 2, , **characterized in that** when the page description language is WML, a do-element with a type attribute is used to define the security measures to be performed on the proxy-server.

4. The method according to claim 1, **characterized in that** function call encapsulated in the standardized page description language document is an encrypting request.

5. The method according to claim 1, **characterized in that** function call encapsulated in the standardized page description language document is a decrypting request.

6. The method according to any of claims 1 - 5, **characte rized in that** in the signature and/or encryption a symmetric or an asymmetric method is used.

7. The method according to any of claims 1 - 6, **characte rized in that** calling said functions with the proxy-server from the PKI-server for the realisation of said security functions.

## Patentansprüche

1. Verfahren zur Bildung einer Endgerät-unabhängigen Schnittstelle für Sicherheitsfunktionen zwischen einem Dienst und einem Empfänger mit Hilfe einer standardisierten Seitenbeschreibungssprache, welches Verfahren folgende Schritte umfasst:
Einbeziehung von Identifikationsdaten des Rezipienten in ein Dokument;
Versendung des Dokuments von dem Dienst an einen Proxyserver;
Überprüfung des vom Rezipienten benutzten Protokolls mit dem Proxyserver;
Übermittlung des Dokuments mit dem Proxyserver zum Rezipienten mit Hilfe eines Übertragungsprotokolls, das vom Rezipienten verstanden wird;
**dadurch gekennzeichnet, dass** das Verfahren des Weiteren folgende Schritte umfasst:
im Dienst Einkapselung der notwendigen Funktionsaufrufe, die sich auf die Sicherheitsfunktionen beziehen, in das Dokument gemäß einer standardisierten Seitenbeschreibungssprache; und
Aufruf besagter Funktionen mit dem Proxyserver zur Realisierung besagter Sicherheitsfunktionen.

2. Verfahren nach Anspruch 1, **dadurch gekennzeichnet, dass** der in der standardisierten Seitenbeschreibungssprache eingekapselte Funktionsaufruf eine Signaturanforderung ist.

3. Verfahren nach Anspruch 2, **dadurch gekennzeichnet, dass** wenn die Seitenbeschreibungssprache WML ist, ein Do-Element mit einem Typattribut benutzt wird, um die Sicherheitsmaßnahmen zu definieren, die auf dem Proxyserver durchgeführt werden sollen.

4. Verfahren nach Anspruch 1, **dadurch gekennzeichnet, dass** der in der standardisierten Seitenbeschreibungssprache eingekapselte Funktionsaufruf eine Chiffrieranforderung ist.

5. Verfahren nach Anspruch 1, dass der in der standardisierten Seitenbeschreibungssprache eingekapselte Funktionsaufruf eine Dechiffrieranforderung ist.

6. Verfahren nach einem der Ansprüche 1 bis 5, **dadurch gekennzeichnet, dass** bei der Signatur und/oder Dechiffrierung ein symmetrisches oder ein asymmetrisches Verfahren benutzt wird.

7. Verfahren nach einem der Ansprüche 1 bis 6, **dadurch gekennzeichnet, dass** besagter Funktionen mit dem Proxyserver vom PKI-Server aufrufen sind zur Realisierung besagter Sicherheitsfunktionen.

## Revendications

1. Procédé relatif à l'établissement d'une interface indépendante d'un terminal pour des fonctions de sécurité entre un service et un destinataire utilisant un langage de description de page standardisé, le procédé comprenant les phases consistant à :
inclure les données d'identification du destinataire dans le document ;
envoyer le document à partir du service
vers un serveur mandataire ;
vérifier le protocole utilisé par le destinataire avec le serveur mandataire ;
transmettre le document avec le serveur mandataire au destinataire utilisant un protocole de communication compris par le destinataire;
**caractérisé en ce que** le procédé comprend en plus les phases consistant à :
encapsuler dans le service les appels fonctionnels nécessaires concernés par les fonctions de sécurité dans le document en conformité avec le langage de description de page standardisé; et
demander lesdites fonctions avec le serveur mandataire pour la mise en oeuvre desdites fonctions de sécurité.

2. Procédé selon la revendication 1, **caractérisé en ce que** l'appel fonctionnel encapsulé dans le langage de description de page standardisé est une demande de signature.

3. Procédé selon la revendication 2, **caractérisé en ce que** quand le langage de description de page standardisé est un WML, un élément "do" avec un attribut type est utilisé pour définir les mesures de sécurité à effectuer sur le serveur mandataire.

4. Procédé selon la revendication 1, **caractérisé en ce que** l'appel fonctionnel encapsulé dans le langage de description de page standardisé est une demande d'encryptage.

5. Procédé selon la revendication 1, **caractérisé en ce que** dans l'appel fonctionnel encapsulé dans le langage de description de page standardisé il y a une demande de décryptage.

6. Procédé selon l'une quelconque des revendications 1 à 5, **caractérisé en ce qu'**un procédé symétrique ou asymétrique est utilisé dans la signature et/ou l'encryptage.

7. Procédé selon l'une quelconque des revendications 1 à 6, **caractérisé en ce que** lesdites fonctions sont appelées avec un serveur mandataire à partir d'un serveur PKI pour la mise en oeuvre desdites fonctions de sécurité.
